# EUROPÄISCHE PATENTANMELDUNG

(11) **EP 3 599 070 A1**
(43) Veröffentlichungstag der Anmeldung: **29.01.2020**
(21) Anmeldenummer: 19187083.1
(22) Anmeldetag: 18.07.2019
(51) Int. Cl.: B29C 33/72, B29C 45/76, G07C 3/14, G01V 8/00, G01N 21/88, B30B 15/00, B30B 15/02, B30B 15/26, B29C 33/70

(54) **VERFAHREN UND PRODUKTIONSANLAGE ZUR VERARBEITUNG EINES WERKSTOFFS**

(30) Priorität: 27.07.2018 DE 102018212617
(71) Anmelder: FRAUNHOFER-GESELLSCHAFT zur Förderung der angewandten Forschung e.V., 80686 München (DE)
(72) Erfinder: PERKO, Leonhard, 64289 Darmstadt (DE); STEINHOFF, Bernd, 64289 Darmstadt (DE)
(74) Vertreter: Pfenning, Meinig & Partner mbB

(57) **Zusammenfassung**

Die Erfindung bezieht sich auf ein Verfahren zur Verarbeitung, insbesondere zur Urformung oder zum Umformen eines Werkstoffes zur seriellen Herstellung von Produkten (4) mittels eines Werkzeuges (1, 2) in einer Produktionsanlage, bei dem wiederholt durch eine erste Einrichtung (3) erste Messdaten bezüglich eines Verschmutzungszustandes des Werkzeuges (1, 2) erfasst werden und bei dem während des Zeitraums, in dem die ersten Messdaten erfasst werden, zusätzlich wiederholt, insbesondere in einem begrenzten Zeitraum nach dem Beginn der Produktion, durch eine zweite Einrichtung (12) zweite Messdaten bezüglich der Qualität der hergestellten Produkte (4) erfasst werden, wobei die ersten und die zweiten Messdaten der Verarbeitungseinheit (5, 6, 9, 13, 14) übermittelt werden und wobei die Verarbeitungseinheit (5, 6, 9, 13, 14) mittels eines selbstlernenden Systems (9a) die zweiten Messdaten mit den ersten Messdaten verknüpft und unter Berücksichtigung einer Mehrzahl von ersten Messdaten und mit diesen verknüpften zweiten Messdaten Kriterien und/oder Parameterschwellen für die Bewertung der ersten Messdaten, insbesondere auf die ersten Messdaten bezogene Entscheidungskriterien und/oder Parameterschwellen für die Notwendigkeit einer Wartung, ermittelt, diese laufend auf erste Messdaten anwendet und Ergebnisdaten oder Signale ausgibt, die sich auf die Notwendigkeit einer Wartung oder Reinigung der Form beziehen. Durch die Gestaltung des Verfahrens wird eine optimierte Ausnutzung der Produktionsanlage ermöglicht, wobei Wartungen und Reinigungen der Anlage optimiert werden.

## Beschreibung

Die Erfindung liegt auf dem Gebiet des Maschinenbaus und der Verarbeitungstechnik bzw. Produktionstechnik und ist mit besonderem Vorteil bei Herstellungsverfahren einsetzbar, die sich für Gießverfahren wiederverwendbarer Formen bedienen.

Bei der Benutzung von Formen bei der seriellen Herstellung von Produkten, beispielsweise bei Gießverfahren, Spritzgießverfahren und anderen Urformverfahren, ergibt sich oft das Problem, dass Stoffe, wie beispielsweise flüchtige Bestandteile aus dem verarbeiteten Material und Nebenprodukte aus chemischen Reaktionen sowie überschüssige Materialreste, an Formen haften bleiben. Mit steigender Zyklenzahl bei periodischer Nutzung von Formen macht sich die Verschmutzung zunehmend bemerkbar, so dass Formen üblicherweise regelmäßig gereinigt werden müssen. Reinigungszyklen unterbrechen die Produktion, sind kostenintensiv und können zum schnelleren Verschleiß von Formen führen.

Üblicherweise wird sowohl bei der Wahl des Materials des Werkzeugs als auch bei den für die Produkte verwendeten Materialien und gegebenenfalls eingesetzten Trennmitteln versucht, die Standzeiten von Formen zu verlängern. Grundsätzlich vermeiden lassen sich Reinigungsvorgänge dadurch nicht.

Üblicherweise werden Verschmutzungen durch mechanische Bearbeitung, chemische Behandlung (durch Säuren oder Basen) sowie thermisch (durch Verbrennen der Ablagerungen oder katalytische Beseitigung) beseitigt. Reinigungszyklen werden üblicherweise aufgrund von vergangenen Erfahrungen in der seriellen Produktion festgelegt.

Um die Zahl der Reinigungsvorgänge zu minimieren, ist bereits in der Vergangenheit auch Messtechnik eingesetzt worden. Beispielsweise sind Verfahren zur optischen Inspektion von Formen mittels Kameras, Messung der elektrischen Leitfähigkeit an der Formenoberfläche oder Ähnlichem bekannt.

Beispielsweise ist aus dem Patentdokument JP 1228810 A ein Messgerät bekannt, das Verschmutzungen eines Werkzeugs aufgrund von Messungen der elektrischen Leitfähigkeit an der Oberfläche misst. Die Messwerte werden dazu verwendet, Entscheidungen über notwendige Reinigungsmaßnahmen zu treffen.

Aus dem Patentdokument JP 2780766 B2 ist ein Verfahren zur optischen Beobachtung eines Werkzeugs mittels Kameras bekannt, wobei im Wesentlichen festgestellt wird, ob ein gegossenes Teil bereits aus der Form entfernt worden ist. Die Auswertung des Bildes erfolgt durch Abgleich mit einem Referenzbild.

Aus dem Patentdokument JP 10138314 ist ein Verfahren bekannt, bei dem Spritzgießformen durch Kameras überwacht werden, wobei Messwerte aus dem Abgleich von Hell-Dunkel-Werten gewonnen werden.

Aus der US-Patentanmeldung US 2003/0094185 A1 ist ein Verfahren zur Messung der Verschmutzung von Werkzeugen bekannt, bei dem Sensoren in verschiedene Teile des Werkzeugs eingebracht sind. Messwerte werden mit Referenzwerten abgeglichen, und aufgrund der Vergleichswerte wird eine Entscheidung über die Notwendigkeit einer Reinigung getroffen.

Der vorliegenden Erfindung liegt vor dem Hintergrund des Standes der Technik die Aufgabe zugrunde, ein Verfahren und eine Produktionsanlage zu schaffen, die eine möglichst umfangreiche und effiziente Nutzung von Werkzeugen erlauben und dabei die Verschmutzung überwachen. Aufgrund einer effizienten Überwachung der Verschmutzung sollen der Aufwand und der Produktionsausfall durch Reinigungsvorgänge minimiert werden.

Die Aufgabe wird gemäß der Erfindung mit den Merkmalen der unabhängigen Patentansprüche 1 und 11 gelöst. Die abhängigen Ansprüche zeigen mögliche Implementierungen der Erfindung auf.

Demgemäß bezieht sich die Erfindung auf ein Verfahren zur Verarbeitung, insbesondere zur Urformung oder zum Umformen eines Werkstoffes zur seriellen Herstellung von Produkten mittels eines Werkzeuges in einer Produktionsanlage, bei dem wiederholt durch eine erste Einrichtung erste Messdaten bezüglich eines Verschmutzungszustandes des Werkzeuges erfasst werden und bei dem während des Zeitraums, in dem die ersten Messdaten erfasst werden, zusätzlich wiederholt, insbesondere in einem begrenzten Zeitraum nach dem Beginn der Produktion, durch eine zweite Einrichtung zweite Messdaten bezüglich der Qualität der hergestellten Produkte erfasst werden, wobei die ersten und die zweiten Messdaten der Verarbeitungseinheit übermittelt werden und wobei die Verarbeitungseinheit mittels eines selbstlernenden Systems die zweiten Messdaten mit den ersten Messdaten verknüpft und unter Berücksichtigung einer Mehrzahl von ersten Messdaten und mit diesen verknüpften zweiten Messdaten Kriterien und/oder Parameterschwellen für die Bewertung der ersten Messdaten, insbesondere auf die ersten Messdaten bezogene Entscheidungskriterien und/oder Parameterschwellen für die Notwendigkeit einer Wartung, ermittelt, diese laufend auf erste Messdaten anwendet und Ergebnisdaten oder Signale ausgibt, die sich auf die Notwendigkeit einer Wartung oder Reinigung der Form beziehen.

Das Verfahren kann grundsätzlich bei allen seriellen Bearbeitungs- und Herstellungsverfahren eingesetzt werden, bei denen ein Werkstoff jeweils bei einem Produktionsvorgang mit einem Werkzeug in Kontakt kommt. Bei einem solchen Kontakt findet eine sukzessive Kontaminierung des Werkzeugs statt, wobei mit jeder Berührung das Werkzeug weiter verschmutzen kann. Dabei ist es sinnvoll, mittels einer Erfassung von ersten Messdaten einen Verschmutzungszustand jeweils zu erfassen und zu verfolgen. Dies ist grundsätzlich bereits bekannt.

Zusätzlich zu der Erfassung von ersten Messdaten über einen Verschmutzungszustand werden jedoch zweite Messdaten bezüglich der Qualität der hergestellten Produkte erfasst. Diese zweiten Messdaten sind allein für sich noch nicht vollständig aussagekräftig und werden mit den ersten Messdaten verknüpft, um für zukünftige Reinigungszyklen das Fortschreiten der Verschmutzung des Werkzeugs besser vorhersagen zu können. Zudem soll es ermöglicht werden, aus den Daten des Verschmutzungszustands die zu erwartende Entwicklung der Qualität der hergestellten Produkte und das Erreichen einer nicht mehr akzeptablen Produktqualität möglichst gut zu prognostizieren. Durch die Verknüpfung der ersten und zweiten Messdaten kann für zukünftige Reinigungszyklen bereits aus den ersten Messdaten die Notwendigkeit einer Reinigung des Werkzeugs entschieden oder prognostiziert werden, wenn das Erreichen einer bestimmten Qualitätsschwelle der Produkte sichergestellt werden soll. Sowohl die ersten Messdaten als auch die zweiten Messdaten können durch Zahlenwerte oder Vektoren aus Zahlenwerten repräsentiert oder in diese umgewandelt werden. Damit ist ein Vergleich sowohl verschiedener erster Messdaten als auch verschiedener zweiter Messdaten untereinander möglich.

Die ersten Messdaten können beispielsweise den Verschmutzungsgrad des Werkzeugs dadurch repräsentieren, dass der Anteil der von einer Verschmutzung bedeckten Fläche des Werkzeugs an der gesamten Werkzeugoberfläche ermittelt wird oder dass die Dicke einer Verunreinigungsschicht gemessen und der Analyse zugrunde gelegt wird. Die zweiten Messdaten können beispielsweise in Form der Oberflächenrauigkeit des Produkts oder in Form der Zahl der registrierten Oberflächenunregelmäßigkeiten oder der Maßhaltigkeit vorliegen oder ermittelt werden.

Die Verknüpfung der ersten Messdaten mit den zweiten Messdaten kann beispielsweise in Form einer Berechnung von Korrelationen oder einer Regression, beispielsweise einer linearen Regression, verwirklicht werden, wobei in der Praxis auch komplexere Systeme, sogenannte selbstlernende Systeme, eingesetzt werden. Solche selbstlernenden Systeme entwickeln selbsttätig Kriterien für die Prognose auftretender Ereignisse, wie beispielsweise der Notwendigkeit einer Reinigung eines Werkzeugs. Diese Kriterien werden danach auf weiterhin gemessene Verschmutzungsdaten angewendet, um jeweils die nächste notwendige Reinigung vorherzusagen. Dabei können erste Messdaten, die bei, vor oder nach der Herstellung eines bestimmten Produktes gemessen wurden, den zweiten Messdaten zugeordnet oder mit den zweiten Messdaten verknüpft werden, die nach der Formung/Herstellung desselben Produktes an diesem gemessen werden. Es können zur Verknüpfung mit ersten Messdaten auch jeweils Durchschnittswerte von zwei, drei oder mehr zweiten Messdaten von nacheinander hergestellten Produkten verwendet werden. Damit können Messwert- oder Qualitätsstreuungen bei den nacheinander hergestellten Produkten ausgeglichen werden.

Zum Training eines solchen selbstlernenden Systems werden von dem System jeweils die ersten Messdaten und die zweiten Messdaten erfasst, und von einer Trainingsinstanz, beispielsweise einer menschlichen Bedienperson oder einer automatisierten Einrichtung zur Beurteilung der Produktqualität, wird aufgrund der ersten und zweiten Messdaten oder auch nur aufgrund der zweiten Messdaten oder aufgrund von aus diesen gewonnenen Größen, wie beispielsweise von Durchschnittswerten, die an zwei, drei oder auch wenigstens vier, fünf oder zehn Produkten gewonnen wurden, eine Entscheidung darüber getroffen, wann eine Reinigung des Werkzeugs stattfinden soll. Dieser Zeitpunkt wird jeweils im System, d. h. bei der Verarbeitungseinheit, abgelegt, so dass diese anhand der getroffenen Entscheidungen und der diesen jeweils zugrunde liegenden Messdaten lernen kann.

Um eine gute Qualität der durch die Verarbeitungseinheit getroffenen Entscheidungen zu erreichen, ist üblicherweise eine Vielzahl von Trainingsdurchgängen notwendig. Für solche Trainingsdatensätze können jedoch Daten bei verschiedenen Produktionssystemen gesammelt und als Trainingsdaten zur Verfügung gestellt werden. Hierdurch kann der Lernvorgang beschleunigt werden. Soll das selbstlernende System nur anhand eigener Messdaten trainiert werden, so müssen die Entscheidungen über Reinigungszyklen und Reinigungsvorgänge eine Zeit lang durch Bedienpersonen oder andere automatisierte Systeme durchgeführt oder begleitet werden.

Das beschriebene Verfahren kann beispielsweise ein Gießverfahren, insbesondere ein Druckgussverfahren, ein Schleudergussverfahren, ein Spritzgießverfahren, ein Rotationsformverfahren, ein Schäumverfahren, ein Kalandrierverfahren, ein Extrudierverfahren , ein Pressverfahren oder Transferpressverfahren sein. Bei all den genannten Verfahren kommt jeweils ein Werkzeug, entweder in Form einer Gussform oder einer Extruderdüse oder anderer Teile, mit dem Werkstoff in Kontakt, aus dem die herzustellenden Produkte bestehen. Das Verfahren kann beispielsweise konkret ein Gieß- oder Spritzgießverfahren für einen Gummiwerkstoff oder ein formendes Verfahren zur Verarbeitung von thermoplastischen Kunststoffen sein. Pressverfahren oder Transferpressverfahren können beispielsweise bei der Verarbeitung von Kautschuken oder Gummi eingesetzt werden.

Die ersten Messdaten bezüglich eines Verschmutzungszustands des Werkzeugs können durch eine Kamera, insbesondere eine Infrarotkamera, eine UV-Kamera, einen kapazitiven oder induktiven Sensor, einen Leitfähigkeitssensor, einen Rauigkeitssensor oder einen chemischen Sensor erfasst werden. Für die genannten Sensoren können sich Messwerte, die im Bereich des Werkzeugs / der Form erfasst werden, in Abhängigkeit von dem Vorhandensein von Verschmutzungen ändern, so dass die Messwerte einen Grad von Verschmutzung repräsentieren können.

Durch das erfindungsgemäße Verfahren kann eine Parameterschwelle für die ersten Messdaten festgelegt werden, deren Erreichen zu einem Signal oder konkret zum Einleiten einer Reinigung eines Werkzeugs führt. Eine Schwelle kann auch als Vektormit einer Kombination verschiedener skalarer Parameter ausgebildet sein, wenn mit einem mehrdimensionalen Parameterraum gearbeitet wird.

Es kann zudem vorgesehen sein, dass die zweiten Messdaten bezüglich der Qualität der hergestellten Produkte durch eine Kamera, eine Infrarotkamera, eine UV-Kamera, einen kapazitiven oder induktiven Sensor, einen Leitfähigkeitssensor, einen Rauigkeitssensor oder einen chemischen Sensor, mechanische Prüfung, Prüfung der Formhaltigkeit oder durch Inspektion und Bewertung durch eine Bedienperson erfasst werden. Zusätzlich oder alternativ kann auch vorgesehen sein, dass jeweils ein Funktionstest mit einem fertigen Produkt zur Überprüfung der Qualität durchgeführt wird.

Die mechanische Prüfung kann beispielsweise jede Art von Messung an dem Produkt bei gleichzeitigem Aufbringen einer mechanischen Belastung oder nach dem Anwenden einer mechanischen Belastung umfassen.

Eine weitere Implementierung der Erfindung kann vorsehen, dass den zweiten Messdaten eine Bewertung hinzugefügt wird, ob ein Produkt vorher gestellten Anforderungen entspricht oder nicht. Es kann beispielsweise vorgesehen sein, dass aus den zweiten Messdaten eine solche Bewertung ermittelt wird. Die zweiten Messdaten können beispielsweise unmittelbar die Ergebnisse von Qualitätsprüfungen ein, beispielsweise in der Form Produkt in Ordnung / nicht in Ordnung. Die zweiten Messdaten können auch die Ergebnisse von Bauteilfunktionsprüfungen sein, bei denen das Bauteil wenigstens teilweise einer Verwendung oder Belastung unterzogen wird, die einer geplanten späteren Verwendung entspricht, z. B. einer Druckprüfung, einer Zugfestigkeitsprüfung oder anderen Arten der Materialprüfung.

Eine weitere Ausgestaltung der Erfindung kann darin liegen, dass während des Zeitraums, in dem die ersten Messdaten erfasst werden, zusätzlich dritte Messdaten bezüglich der Umgebungsbedingungen, insbesondere die Umgebungstemperatur und/oder Luftfeuchtigkeit und/oder Luftdruck, erfasst und der Verarbeitungseinheit zugeführt und insbesondere bei der Ermittlung von Entscheidungskriterien und/oder bei der Entscheidung über die Notwendigkeit einer Wartung berücksichtigt werden.

In vielen Fällen ist der Grad oder die Geschwindigkeit der Verschmutzung eines Werkzeugs nicht nur von der Art und dem Material des Werkzeugs und dem verarbeiteten Werkstoff abhängig, sondern auch von Umgebungsbedingungen, wie beispielsweise der Umgebungstemperatur oder der Luftfeuchtigkeit. Diese Größen bieten dann im Zusammenhang mit den erfassten ersten und zweiten Messdaten eine wichtige Grundlage zur Ermittlung der erwarteten weiteren Verschmutzung und/oder zur Ermittlung eines voraussichtlichen empfohlenen Reinigungszeitpunkts des Werkzeugs.

Eine weitere Implementierung eines Verfahrens der oben genannten Art kann vorsehen, dass während des Zeitraums, in dem die ersten Messdaten erfasst werden, zusätzlich vierte Messdaten bezüglich der Betriebsparameter des Werkzeuges und/oder der Produktionsanlage und/oder fünfte Messdaten bezüglich der Eigenschaften des bei der Verarbeitung verwendeten oder verarbeiteten Werkstoffs erfasst und der Verarbeitungseinheit zugeführt werden und insbesondere bei der Ermittlung von Entscheidungskriterien und/oder bei der Ermittlung der Ergebnisdaten, insbesondere der Entscheidung über die Notwendigkeit einer Wartung berücksichtigt werden. Solche Betriebsparameter können beispielsweise eine Temperatur eines Werkzeugs oder die beim Produktionsprozess angewandten Drücke oder Temperaturen sein. Auch diese können für die Prognose bezüglich der Notwendigkeit einer Reinigung eine Rolle spielen. Ebenfalls können die erfassten Eigenschaften des verarbeiteten Werkstoffs, wie beispielsweise Feuchte, Klebrigkeit, chemische Reaktivität oder Beimengungen eine Rolle spielen.

Eine weitere Ausgestaltung des Verfahrens kann vorsehen, dass von der Verarbeitungseinheit ermittelte Ergebnisdaten, insbesondere die Bewertung oder Entscheidung über die Notwendigkeit einer Wartung, einer Steuerung der Produktionsanlage zugeleitet werden.

Es kann weiter vorgesehen sein, dass die Ergebnisdaten von der Verarbeitungseinheit in der Form einer Dringlichkeit einer Wartung und/oder in Form einer Ausfallwahrscheinlichkeit eines hergestellten Produktes und/oder in Form der Voraussage des Verlaufs der Dringlichkeit einer Wartung während einer Mehrzahl von zukünftig durchgeführten Produktionsprozessen angegeben werden. Damit wird durch die Verarbeitungseinrichtung nicht notwendigerweise eine digitale Information über die Notwendigkeit einer Wartung (Wartung notwendig ja/nein) gegeben, sondern eine Dringlichkeitsangabe, beispielsweise in Form einer Ampel, die anzeigt, ob eine Wartung unnötig, nützlich oder unbedingt notwendig ist. Durch die Formulierung der Bewertungsergebnisse in Form einer nicht absoluten, sondern verhältnismäßigen Angabe kann das Bedienpersonal einer Produktionsanlage frei entscheiden, ob beispielsweise ein Produktionszyklus vor einer Reinigung noch zu Ende gebracht wird, wenn eine Produktionscharge nahezu beendet ist.

Das genannte Verfahren kann zudem vorsehen, dass das selbstlernende System ein neuronales Netz, Decision tree learning, Assoziationsanalyse oder Deep learning umfasst.

Die Erfindung bezieht sich außer auf ein Verfahren der oben erläuterten Art auch auf eine Produktionsanlage mit einem Werkzeug zur Formung oder Bearbeitung eines Produktes aus einem Werkstoff mit einer Einrichtung zur Erfassung erster Messdaten bezüglich eines Verschmutzungszustandes des Werkzeuges sowie einer Einrichtung zur Erfassung zweiter Messdaten bezüglich der Qualität der hergestellten Produkte und mit einer Verarbeitungseinheit zur Verarbeitung der ersten und der zweiten Messdaten, wobei die Verarbeitungseinheit ein selbstlernendes System aufweist, das dazu eingerichtet ist, die zweiten Messdaten mit den ersten Messdaten zu verknüpfen und unter Berücksichtigung einer Mehrzahl von ersten Messdaten und mit diesen verknüpften zweiten Messdaten Kriterien für die Bewertung der ersten Messdaten, insbesondere auf die ersten Messdaten bezogene Entscheidungskriterien für die Notwendigkeit einer Wartung, zu ermitteln, diese Entscheidungskriterien nach ihrer Ermittlung laufend auf aktuell erfasste erste Messdaten anzuwenden und Ergebnisdaten auszugeben, die den Grad der Notwendigkeit einer Wartung repräsentieren.

Mit einer solchen Produktionsanlage kann unter Anwendung des erfindungsgemäßen Verfahrens die Reinigung oder Wiederherstellung von Werkzeugen der Produktionsanlage optimiert werden, so dass die Reinigung/Wiederherstellung nicht unnötig, jedoch auch nicht zu selten stattfindet.

Im Folgenden wird die Erfindung anhand von Figuren einer Zeichnung gezeigt und nachfolgend erläutert. Dabei zeigt
- Fig. 1: eine schematische Darstellung einer Produktionsanlage mit Stationen, die teilweise Verfahrensschritte repräsentieren,
- Fig. 2: eine Produktionsanlage ähnlich der in Figur 1 dargestellten mit einem zusätzlichen Schritt der Qualitätsprüfung,
- Fig. 3: eine Produktionsanlage ähnlich der in Figur 1 dargestellten mit zusätzlichen Sensoren für Umgebungsbedingungen,
- Fig. 4: eine Produktionsanlage ähnlich der in Figur 1 dargestellten, wobei Ergebnisse der Analyse an eine Maschinensteuerung gesendet werden, sowie
- Fig. 5: ein Diagramm mit ersten und zweiten Messdaten sowie einem ermittelten Schwellenwert der ersten Messdaten und einer kritischen Qualitätsschwelle des Bauteils.

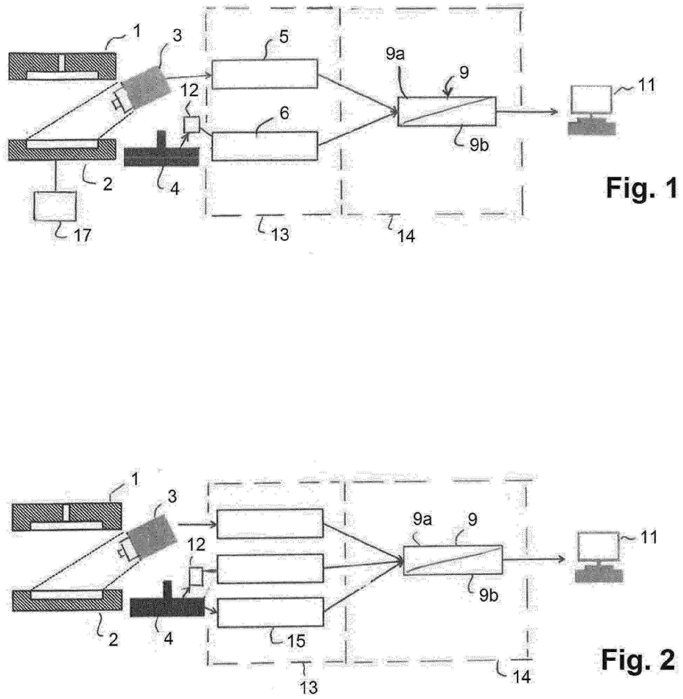

Figur 1 zeigt eine Produktionsanlage in schematischer Darstellung, wobei eine Gießform mit einer oberen Formhälfte 1 und einer unteren Formhälfte 2 dargestellt ist, die symbolisch auch für andere mögliche Werkzeuge, wie beispielsweise eine Extrusionsdüse, stehen. Zudem ist ein in der Form hergestelltes Produkt/Bauteil 4 dargestellt, das die Form 1, 2 bereits verlassen hat. Außerdem ist ein erster Sensor 3 in Form einer Kamera zur Erfassung der ersten Messdaten bezüglich des Verschmutzungszustands des Werkzeugs 1, 2 dargestellt. Bei der Kamera kann es sich beispielsweise um eine Kamera oder Infrarot-Kamera handeln, es kann jedoch auch ein anderer Licht- oder Bildsensor oder ein elektrischer Sensor, beispielsweise ein Feldstärke- oder Widerstandssensor, anstelle der Kamera 3 vorgesehen sein. Es kann auch jede andere Art von Sensor anstelle der Kamera vorgesehen sein, die die Detektion von Verschmutzungen der Form ermöglicht, wie beispielsweise chemische Sensoren.

Der Sensor / die Kamera 3 ist mit einer Datenverarbeitungseinheit 5 verbunden, in der die Messdaten/Bilddaten verarbeitet werden. Den Bilddaten werden dabei durch eine Analyse ein oder mehrere Parameter oder ein Trend oder ein Prognosewert zugeordnet, die die Art und das Ausmaß der Verschmutzung der Form repräsentieren.

Zudem ist ein Sensor 12 vorgesehen, der zweite Messdaten durch eine Erfassung von Eigenschaften und Parametern des Produkts 4 erfasst. Der Sensor 12 kann beispielsweise ebenfalls als Kamera oder als eine Art von Sensor, beispielsweise als Oberflächenrauigkeitssensor, ausgebildet sein. Die zweiten Messdaten können beispielsweise als Betrag eine durchschnittliche Rauigkeit oder eine Anzahl oder ein Flächenanteil von Flächen mit erhöhter Rauigkeit an der Oberfläche des Produkts repräsentieren. Für diese Größen kann eine Akzeptanzschwelle im Voraus festgelegt sein. Diese Schwelle kann durch das erfindungsgemäße Verfahren eine Akzeptanzschwelle der ersten Messdaten zugeordnet werden. Die durch den Sensor 12 erfassten zweiten Messdaten werden einer Bauteilbewertungseinheit 6 zugeleitet, die die zweiten Messdaten analysiert und diesen einen oder mehrere Parameter, beispielsweise die Eigenschaft "in Ordnung" / "nicht in Ordnung" oder "verwendbar" / "nicht verwendbar" zuordnet. Es können auch mehr als zwei, insbesondere drei Bewertungsstufen für die Bewertung der Bauteile vorgesehen sein.

Die Erfassung der Qualität des Produkts kann auch durch eine Bedienperson in einer Lernphase geschehen, und die Bauteilbewertungseinheit kann dann durch eine Eingabeeinheit zur Eingabe einer Bewertung gemäß zwei oder mehr Kategorien (in Ordnung / nicht in Ordnung) ersetzt sein.

In der Prognose- und Entscheidungseinheit 9 werden die Analysedaten der Verarbeitungseinheit 5 und der Bauteilbewertungseinheit 6 zusammengeführt. Die Prognose- und Entscheidungseinheit 9 weist ein selbstlernendes System 9a auf, das aufgrund der Verknüpfung der ersten Messdaten und der hieraus gewonnenen Analysedaten sowie der zweiten Messdaten und der hieraus gewonnenen Analysedaten der Bauteilbewertungseinheit 6 Kriterien oder Schwellenwerte für die ersten Messdaten oder für die aus den ersten Messdaten gewonnenen Parameter gewinnt, mit denen später jeweils ermittelte erste Messdaten oder hieraus gewonnene Analysedaten verglichen werden, um zu entscheiden, ob die Form weiter benutzt werden kann oder gereinigt werden muss. Zudem können Aussagen darüber gewonnen werden, für wie viele Produktionszyklen die Form noch verwendet kann, bis eine Reinigung notwendig ist, oder es kann ein Parameter für die Dringlichkeit einer Reinigung gewonnen werden. Ein solcher Parameter kann beispielsweise die Aussage "Form sauber" oder "Form kann gereinigt werden" oder "Form muss unbedingt gereinigt werden" und eventuell auch noch eine Kategorie "Form ist nicht mehr verwendbar und muss erneuert werden" zulassen.

Die Schwellenwerte oder Kriterien für die Entscheidung über die Notwendigkeit der Reinigung der Form können durch Abgleich der ersten Messdaten oder der hieraus gewonnenen Analysedaten mit den zweiten Messdaten oder den aus diesen gewonnenen Analysedaten gewonnen werden. Beispielsweise kann bei einem Bauteil die Erfassung der zweiten Messdaten zu dem Ergebnis führen, dass dieses nicht in Ordnung bzw. nicht verwendbar ist. Daraus kann der Schluss gezogen werden, dass die gleichzeitig erfassten ersten Messdaten auf die Notwendigkeit einer Reinigung der Form hindeuten. Diese Information kann dazu verwendet werden, nach einer Reinigung der Form dann, wenn in der Zukunft die ersten Messdaten sich entsprechenden Schwellenwerten nähern, bereits eine Reinigung der Form dringend zu empfehlen und gegebenenfalls einen Alarm zum Stoppen der Produktion auszugeben.

Durch Analyse der Serie von ersten Messdaten, die vor Erreichen eines identifizierten kritischen Schwellenwerts ermittelt worden sind, kann eine typische Entwicklung der ersten Messwerte über die Anzahl von Produktionszyklen ermittelt und damit eine weitere zukünftige Verschmutzung zu jeder Zeit prognostiziert werden.

Derartige Schwellenwerte und Entwicklungskurven der ersten Messdaten und gegebenenfalls auch der zweiten Messdaten kann die Prognose- und Entscheidungseinheit 9 selbst ermitteln. Sie kann hierzu beispielsweise einen selbstlernenden Algorithmus verwenden und ist üblicherweise als Datenverarbeitungseinrichtung, beispielsweise als Mikroprozessor oder Mikrocontroller, programmierbar ausgestaltet. Die Prognose und Entscheidungseinheit 9 kann beispielsweise auch als neuronales Netz oder mit einem neuronalen Netz aufgebaut sein, das mit einer Serie von ersten und zweiten Messdaten trainiert werden kann. Hierzu kann zudem eine Bedienperson bei Erreichen bestimmter Schwellenwerte der ersten und/oder zweiten Messdaten Eingaben machen, die dem System mitteilen, ob die Form weiter verwendbar sein soll oder nicht. Es können auch erste und/oder zweite Messdaten von weiteren Produktionseinrichtungen zum Trainieren der Prognose- und Entscheidungseinheit 9 verwendet werden.

In diesem Zusammenhang ist zur Vereinheitlichung der in der vorliegenden Anmeldung verwendeten Begriffe anzumerken, dass die Kamera 3 bzw. der anstelle dieser Kamera eingesetzte Sensor eine Ausgestaltung der Einrichtung zur Erfassung erster Messdaten bildet, während der Sensor 12 eine Einrichtung zur Erfassung zweiter Messdaten bildet. Als Verarbeitungseinheit wird die gesamte Einheit verstanden, die die Datenverarbeitungseinheit 5 sowie die Bauteilbewertungseinheit 6 und die Prognose- und Entscheidungseinheit 9 umfasst. Diese Einheiten sind in den beiden gestrichelt dargestellten Kästen 13, 14 enthalten. Dabei kann der Kasten 13 auch als Vorverarbeitungseinheit und der Kasten 14 als Prognose- und Entscheidungseinheit verstanden werden.

Das Segment 9a der Prognose- und Entscheidungseinheit 9 enthält das selbstlernende System, und in diesem werden nach dem Lernvorgang auch die Entscheidungskriterien bzw. Schwellen der Parameter von Messdaten und hieraus gewonnenen Analysedaten gespeichert. Das Segment 9b bildet die eigentliche Prognoseeinrichtung, die aufgrund der durch das selbstlernende System 9a gelernten oder ermittelten Schwellenwerte und/oder Parameter im laufenden Betrieb Prognosen bildet und/oder Entscheidungen trifft. Diese Prognoseeinrichtung / das Segment 9b kann nach dem Lernvorgang unter Rückgriff auf die erlernten Schwellendaten jeweils bei der Analyse von ersten Messdaten und den hieraus gewonnenen Parametern Entscheidungen darüber treffen, ob ein Alarm ausgegeben wird oder ob die Produktionsanlage gestoppt werden muss. Das Segment 9b kann zudem eine Prognose darüber erstellen, wann eine Reinigung der Form 1, 2 zu empfehlen ist oder wann dies unbedingt notwendig ist oder sein wird.

Letztlich enthält die Produktionsanlage als Benutzerschnittstelle auch eine Eingabe/Ausgabe-Einheit, die mit 11 bezeichnet ist und die beispielsweise einen Bildschirm, jedoch auch eine Tonausgabe und optional eine Ausschalteinrichtung oder Anhalteinrichtung für die Produktionsanlage aufweist oder mit einer solchen Ausschalteinrichtung verbunden ist.

Die Geräte 5, 6, 9a, 9b können jeweils als einzelnes Gerät oder Modul oder auch als Teil/Unterprogramm eines Steuerungsprogramms einer Steuerung der Produktionsanlage implementiert sein. Es kann zudem sinnvoll sein, erste und/oder zweite Messdaten für jedes einzelne hergestellte Produkt in einer Datenbank zu speichern, um den Produkten später die Messdaten individuell zuordnen zu können.

Der Ablauf des Lernvorgangs stellt sich wie folgt dar: Die Press- oder Spritzgießform 1, 2 öffnet sich, und das Bauteil wird entnommen. Der Sensor / die Kamera 3 erfasst durch die Maschinensteuerung in regelmäßigen Abständen, beispielsweise in regelmäßigen zeitlichen Abständen oder jeweils nach einer bestimmten Anzahl von Produktionszyklen, erste Messdaten der Formteiloberfläche. Die so erfassten ersten Messdaten werden der Datenverarbeitungseinheit 5 zugeleitet, welche hieraus Parameter gewinnt, wie beispielsweise die durch Verschmutzungen bedeckte Fläche oder der relative Flächenanteil, der von Verschmutzungen bedeckt ist, oder die Grauabstufungen der Verschmutzung oder ähnliche optische oder auf andere Weise erfassbare Messgrößen.

Parallel dazu wird zumindest in der Anlernphase, optional auch während der Nutzungsphase, mittels der Bauteilbewertungseinheit 6 eine Bauteilbewertung durchgeführt. In der Anlernphase kann eine solche Bewertung auch durch eine Bedienperson vorgenommen werden, die die jeweils gefertigten Bauteile inspiziert und an das System der Produktionsanlage, beispielsweise mittels eines Tasters, die Information "in Ordnung" oder "nicht in Ordung" abgibt. Diese Information kann jedoch auch durch eine automatische Bewertungseinheit gewonnen werden.

Beim Anlernprozess können auch parallel Parameter der Bauteilbewertung durch die Bauteilbewertungseinheit 6 erfasst und jeweils Entscheidungen oder Eingaben durch eine menschliche Bedienperson vorgenommen werden. Beide Bewertungsmethoden können kombiniert und miteinander abgeglichen werden.

Das selbstlernende System 9a der Prognose- und Entscheidungseinheit 9 verknüpft die Daten aus der Datenverarbeitungseinheit 5 mit den zugeleiteten Qualitätsinformationen von der Bedienperson und/oder der Bauteilbewertungseinheit 6 und ermittelt aufgrund dieser Verknüpfung Kriterien und/oder Schwellenwerte eines oder mehrerer Parameter. Auf der Basis dieser Kriterien werden dem Benutzer über die Benutzerschnittstelle 11 nach der Lernphase Handlungsempfehlungen gegeben, oder es werden unmittelbar Steuerungsbefehle erzeugt.

Die Prognose- und Entscheidungseinheit 9 kann außer Empfehlungen für eine Reinigung der Form 1, 2 auch Prognosen über die Qualität der mit der ungereinigten Form weiter hergestellten Bauteile abgeben, beispielsweise, mit welcher Wahrscheinlichkeit das nächste hergestellte Bauteil ausfällt oder bestimmten Anforderungen nicht genügt, sofern vor seiner Produktion keine Reinigung der Form durchgeführt wird.

Figur 2 zeigt eine Produktionsanlage ähnlich der in Figur 1 dargestellten, wobei zudem eine Qualitätsprüfungseinrichtung 15 dargestellt ist. Diese kann unabhängig von der Erfassung zweiter Messdaten durch einen Sensor 12 eine Qualitätsprüfung der Bauteile 4 durchführen, beispielsweise durch eine bestimmungsähnliche Belastung der Bauteile.

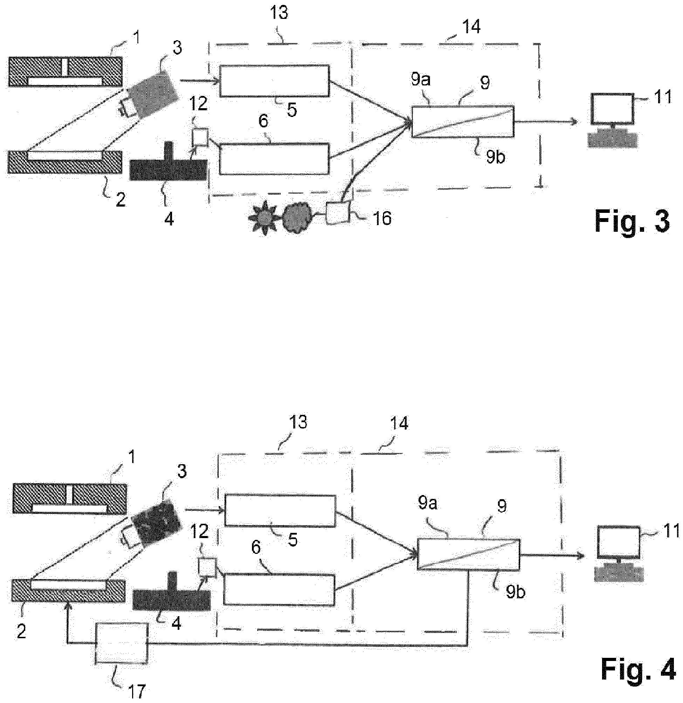

In Figur 3 ist eine Produktionsanlage dargestellt, bei der zusätzlich zu den ersten und zweiten Messdaten noch dritte Messdaten durch einen Sensor 16 erfasst und der Prognose- und Entscheidungseinheit 9 zugeführt werden. Dieser Sensor 16 kann beispielsweise Umgebungsbedingungen, wie die Luftfeuchtigkeit in der Umgebung der Produktionsanlage bzw. in der unmittelbaren Umgebung der Form 1, 2 sowie die Temperatur in diesem Bereich, erfassen. Auch andere Größen, wie beispielsweise die Luftverschmutzung im Bereich der Form oder eine Kontamination mit Stoffen, die nicht unmittelbar die Produktion betreffen, können bei der Formverschmutzung oder bei den Folgen der Formverschmutzung eine Rolle spielen und können bei der Auswertung der Daten durch die Prognose- und Entscheidungseinheit 9 berücksichtigt werden. Auch Parameter der Produktionsanlage, wie die Produktionsgeschwindigkeit oder eine Temperatur der Form 1, 2, können separat gewonnen und der Prognose- und Entscheidungseinheit 9 zugeführt werden.

In Figur 4 ist zusätzlich zu den im Zusammenhang mit Figur 1 beschriebenen Merkmalen einer Produktionsanlage eine direkte Verbindung der Prognose- und Entscheidungseinheit 9 mit der Maschinensteuerung 17 dargestellt, so dass durch die Prognose- und Entscheidungseinheit 9 der Produktionsprozess unmittelbar gestoppt oder ein automatischer Reinigungsprozess initiiert werden kann. Dies kann zusätzlich oder alternativ zur Ausgabe eines Alarms mittels der Benutzerschnittstelle oder der Eingabe/Ausgabe-Einheit 11 geschehen.

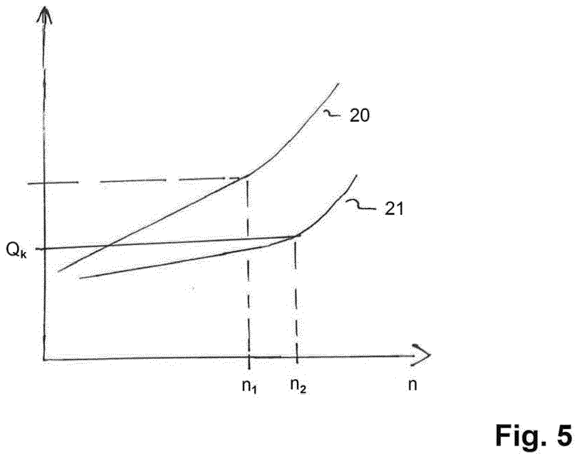

Figur 5 zeigt ein Diagramm, bei dem auf der vertikalen Achse die Werte von ersten und zweiten Messdaten, beispielsweise ein Verschmutzungsgrad 20 einer Form und eine Oberflächenrauigkeit 21 des mit der Form hergestellten Bauteils, gegen die Zahl n der nacheinander hergestellten Bauteile aufgetragen sind. Das Diagramm ist nur als vereinfachtes Beispiel zu verstehen, anhand dessen das Prinzip der Erfindung skizzenhaft erläutert wird. Bei der Zahl n₂ ist eine kritische Bauteilqualität Qₖ erreicht, die nicht mehr akzeptabel ist. Dies deutet sich bereits vor Erreichen von n₂ bei n₁ an, wo der Verschmutzungsgrad 20 der Form von einem Verschmutzungsgrad Vₖ an beginnt, überlinear zuzunehmen. Hat das System diesen, hier vereinfacht dargestellten Zusammenhang gelernt, so wird nach einer Formreinigung und Wiederaufnahme der Produktion diese bei Erreichen des Formverschmutzungsgrades Vₖ gestoppt, oder es wird ein Hinweis auf die Notwendigkeit einer Reinigung gegeben.

## Patentansprüche

1. Verfahren zur Verarbeitung, insbesondere zur Urformung oder zum Umformen eines Werkstoffes zur seriellen Herstellung von Produkten (4) mittels eines Werkzeuges (1, 2) in einer Produktionsanlage, bei dem wiederholt durch eine erste Einrichtung (3) erste Messdaten bezüglich eines Verschmutzungszustandes des Werkzeuges (1, 2) erfasst werden und bei dem während des Zeitraums, in dem die ersten Messdaten erfasst werden, zusätzlich wiederholt, insbesondere in einem begrenzten Zeitraum nach dem Beginn der Produktion, durch eine zweite Einrichtung (12) zweite Messdaten bezüglich der Qualität der hergestellten Produkte (4) erfasst werden, wobei die ersten und die zweiten Messdaten der Verarbeitungseinheit (5, 6, 9, 13, 14) übermittelt werden und wobei die Verarbeitungseinheit (5, 6, 9, 13, 14) mittels eines selbstlernenden Systems (9a) die zweiten Messdaten mit den ersten Messdaten verknüpft und unter Berücksichtigung einer Mehrzahl von ersten Messdaten und mit diesen verknüpften zweiten Messdaten Kriterien und/oder Parameterschwellen für die Bewertung der ersten Messdaten, insbesondere auf die ersten Messdaten bezogene Entscheidungskriterien und/oder Parameterschwellen für die Notwendigkeit einer Wartung, ermittelt, diese laufend auf erste Messdaten anwendet und Ergebnisdaten oder Signale ausgibt, die sich auf die Notwendigkeit einer Wartung oder Reinigung der Form beziehen.

2. Verfahren nach Anspruch 1, **dadurch gekennzeichnet, dass** das Verarbeitungsverfahren ein Gießverfahren, insbesondere ein Druckgussverfahren, ein Schleudergussverfahren, ein Spritzgießverfahren, ein Rotationsformverfahren, ein Schäumverfahren, ein Kalandrierverfahren ,ein Extrusionsverfahren, ein Pressverfahren oder Transferpressverfahren ist.

3. Verfahren nach Anspruch 1 oder 2, **dadurch gekennzeichnet, dass** die ersten Messdaten bezüglich eines Verschmutzungszustandes des Werkzeuges durch eine Kamera (3), eine Infrarotkamera, eine UV-Kamera, einen kapazitiven oder induktiven Sensor, einen Leitfähigkeitssensor, einen Rauigkeitssensor oder einen chemischen Sensor erfasst werden.

4. Verfahren nach Anspruch 1, 2 oder 3, **dadurch gekennzeichnet, dass** den zweiten Messdaten eine Bewertung hinzugefügt wird, ob ein Produkt (4) vorher gestellten Anforderungen entspricht oder nicht.

5. Verfahren nach Anspruch 1, 2, 3 oder 4, **dadurch gekennzeichnet, dass** die zweiten Messdaten bezüglich der Qualität der hergestellten Produkte durch eine Kamera (12), eine Infrarotkamera, eine UV-Kamera, einen kapazitiven oder induktiven Sensor, einen Leitfähigkeitssensor, einen Rauigkeitssensor, einen chemischen Sensor, durch mechanische Prüfung, Prüfung der Formhaltigkeit oder durch Inspektion und Bewertung durch eine Bedienperson erfasst werden.

6. Verfahren nach einem der Ansprüche 1 bis 5, **dadurch gekennzeichnet, dass** während des Zeitraums, in dem die ersten Messdaten erfasst werden, zusätzlich dritte Messdaten bezüglich der Umgebungsbedingungen, insbesondere die Umgebungstemperatur und/oder Luftfeuchtigkeit und/oder Luftdruck, erfasst und der Verarbeitungseinheit zugeführt und insbesondere bei der Ermittlung von Entscheidungskriterien und/oder bei der Entscheidung über die Notwendigkeit einer Wartung berücksichtigt werden.

7. Verfahren nach einem der Ansprüche 1 bis 6, **dadurch gekennzeichnet, dass** während des Zeitraums, in dem die ersten Messdaten erfasst werden, zusätzlich vierte Messdaten bezüglich der Betriebsparameter des Werkzeuges und/oder der Produktionsanlage und/oder fünfte Messdaten bezüglich der Eigenschaften des bei der Verarbeitung verwendeten oder verarbeiteten Werkstoffs erfasst und der Verarbeitungseinheit zugeführt werden und insbesondere bei der Ermittlung von Entscheidungskriterien und/oder bei der Ermittlung der Ergebnisdaten, insbesondere der Entscheidung über die Notwendigkeit einer Wartung berücksichtigt werden.

8. Verfahren nach einem der Ansprüche 1 bis 7, **dadurch gekennzeichnet, dass** von der Verarbeitungseinheit (5, 6, 9, 13, 14) ermittelte Ergebnisdaten, insbesondere die Bewertung oder Entscheidung über die Notwendigkeit einer Wartung, einer Steuerung (17) der Produktionsanlage zugeleitet werden.

9. Verfahren nach einem der Ansprüche 1 bis 8, **dadurch gekennzeichnet, dass** die Ergebnisdaten von der Verarbeitungseinheit (5, 6, 9, 13, 14) in der Form einer Dringlichkeit einer Wartung und/oder in Form einer Ausfallwahrscheinlichkeit eines hergestellten Produktes und/oder in Form der Voraussage des Verlaufs der Dringlichkeit einer Wartung während einer Mehrzahl von zukünftig durchgeführten Produktionsprozessen ausgegeben werden.

10. Verfahren nach einem der Ansprüche 1 bis 9, **dadurch gekennzeichnet, dass** das selbstlernende System (9a) ein neuronales Netz oder ein Datenverarbeitungsprogramm mit einem selbstlernenden Algorithmus, insbesondere Decision tree learning, Assoziationsanalyse oder Deep learning umfasst.

11. Produktionsanlage mit einem Werkzeug (1, 2) zur Formung oder Bearbeitung eines Produktes (4) aus einem Werkstoff mit einer Einrichtung (3) zur Erfassung erster Messdaten bezüglich eines Verschmutzungszustandes des Werkzeuges sowie einer Einrichtung (12) zur Erfassung zweiter Messdaten bezüglich der Qualität der hergestellten Produkte und mit einer Verarbeitungseinheit (5, 6, 9, 13, 14) zur Verarbeitung der ersten und der zweiten Messdaten, wobei die Verarbeitungseinheit ein selbstlernendes System aufweist, das dazu eingerichtet ist, die zweiten Messdaten mit den ersten Messdaten zu verknüpfen und unter Berücksichtigung einer Mehrzahl von ersten Messdaten und mit diesen verknüpften zweiten Messdaten Kriterien für die Bewertung der ersten Messdaten, insbesondere auf die ersten Messdaten bezogene Entscheidungskriterien für die Notwendigkeit einer Wartung, zu ermitteln, diese Entscheidungskriterien nach ihrer Ermittlung laufend auf aktuell erfasste erste Messdaten anzuwenden und Ergebnisdaten auszugeben, die den Grad der Notwendigkeit einer Wartung repräsentieren.
